# EUROPÄISCHE PATENTSCHRIFT

(11) **EP 3 408 421 B1**
(45) Veröffentlichungstag und Bekanntmachung des Hinweises auf die Patenterteilung: **11.03.2026**
(21) Anmeldenummer: 17703344.6
(22) Anmeldetag: 25.01.2017
(51) Int. Cl.: C21D 9/00, C21D 1/673, C21D 9/48, C21D 8/00, C21D 1/34, B21D 22/02, B23P 9/00, B62D 25/04, B21D 24/16, B21D 22/20

(54) **VERFAHREN UND VORRICHTUNG ZUR WÄRMEBEHANDLUNG EINES BAUTEILS AUS STAHL**
METHOD AND DEVICE FOR HEAT TREATING OF A COMPONENT OF STEEL
PROCÉDÉ ET DISPOSITIF POUR TRAITEMENT THERMIQUE D'UN COMPOSANT EN ACIER

(30) Priorität: 25.01.2016 DE 102016201024; 25.01.2016 DE 102016201025; 09.02.2016 DE 102016201936; 23.02.2016 DE 102016202766; 27.10.2016 DE 102016120605
(43) Veröffentlichungstag der Anmeldung: 05.12.2018
(73) Patentinhaber: Schwartz GmbH, 52152 Simmerath (DE)
(72) Erfinder: WILDEN, Frank, 52152 Simmerath (DE); REINARTZ, Andreas, 52156 Monschau (DE); WINKEL, Jörg, 52385 Nideggen-Schmidt (DE)
(74) Vertreter: Keenway Patentanwälte Neumann Heine Taruttis
(86) Internationale Anmeldenummer: PCT/EP2017/051509
(87) Internationale Veröffentlichungsnummer: WO 2017/129601

(56) Entgegenhaltungen:
- EP-A1- 1 715 066
- EP-A1- 1 715 066
- EP-A1- 2 366 805
- EP-A1- 2 548 975
- EP-B1- 2 324 938
- EP-B1- 2 366 805
- WO-A1-2010/150683
- DE-A1- 102009 050 623
- DE-A1- 102009 050 623
- DE-A1- 102010 049 205
- DE-A1- 102014 201 259
- DE-A1- 19 723 655
- DE-B3- 102008 047 971
- DE-C1- 10 208 216
- DE-C1- 10 208 216
- US-A1- 2015 299 817
- US-A1- 2015 299 817

## Beschreibung

Die Erfindung betrifft ein Verfahren und eine Vorrichtung zur Wärmebehandlung eines Bauteils aus Stahl.

Die Erfindung findet insbesondere Anwendung beim partiellen Härten von gegebenenfalls vorbeschichteten Bauteilen aus vorzugsweise einem hochfesten Mangan-Bor-Stahl.

Zur Herstellung sicherheitsrelevanter Fahrzeug-Karosseriebauteile aus Stahlblech ist es regelmäßig erforderlich das Stahlblech während oder nach der Umformung zu dem Karosseriebauteil zu härten. Hierzu hat sich ein Wärmebehandlungsverfahren etabliert, das als "Presshärten" bezeichnet wird. Dabei wird das Stahlblech, das regelmäßig in der Form einer Platine bereitgestellt wird zunächst in einem Ofen aufgeheizt und anschließend während der Umformung in einer Presse abgekühlt und dadurch gehärtet.

Durch das Erwärmen und Presshärten tritt regelmäßig eine (wenn auch geringe) geometrische Veränderung des Bauteils gegenüber dem unerwärmten Zustand ein. Dies erfordert üblicherweise ein dem Presshärten nachfolgendes Beschneiden des Stahlblechs auf die gewünschte Endkontur. Ein nachfolgender Beschnitt kann in der Regel nur dann entfallen, wenn die Toleranzvorgabe für das herzustellende Bauteil so weit ist, dass diese Veränderung noch zulässigerweise innerhalb der Toleranzen liegt. In den typischen Anwendungsbereichen des Presshärtens sind die zulässigen Toleranzvorgaben jedoch häufig enger.

Zudem ist zu berücksichtigen, dass die Stahlbleche nach dem Presshärten in der Regel eine Zugfestigkeit von mehr als 1000 MPa [Megapascal] aufweisen. Daher können die gehärteten Bauteile nur noch mit besonderen Verfahren geschnitten werden. Ein hierzu grundsätzlich anwendbares Verfahren ist das sogenannte Hartschneiden. Hierzu sind jedoch Werkzeuge erforderlich, die einen Stahl mit Zugfestigkeit von mehr als 1000 MPa durchtrennen können. Zum einen verlängert das Hartschneiden die Fertigungskette und zum anderen bringen die hierfür erforderlichen Werkzeuge hohe Investitionskosten mit sich, unterliegen einem hohen Verschleiß und sind wartungsintensiv. Das Hartschneiden hat sich in der industriellen Serienfertigung daher nicht bewährt.

Ein in der industriellen Serienfertigung gängiges Verfahren ist das Laserschneiden. Hierbei werden die gehärteten Bauteile mittels mindestens eines Laserstrahls auf die gewünschte Endkontur beschnitten. Das Laserschneiden weist jedoch den Nachteil auf, dass es regelmäßig lange Taktzeiten, hohe Energiekosten und hohe Investitionskosten mit sich bringt.

Verfahren zum Herstellen von metallischen Bauteilen sind beispielsweise aus der DE 10 2009 050 623 A1, DE 102 08 216 C1 und EP 1 715 066 A1 bekannt. Aus der US 2015/299817 A1 ist weiterhin ein Verfahren bekannt, bei dem auf einen ersten Heizschritt ein partielles Kühlen und anschließend ein zweiter Heizschritt folgt. DE10 2010 049205 A1 offenbart eine Warmumformlinie zum Warmumformen von blechförmigem Material und ein Verfahren zum Warmumformen von blechförmigem Material, das als Blechplatine oder als Blechband ausgebildet ist. WO2010150683A1 offenbart ein Verfahren zum Warmumformen.

Hiervon ausgehend ist es Aufgabe der vorliegenden Erfindung, die mit Bezug auf den Stand der Technik geschilderten Probleme zumindest teilweise zu lösen. Insbesondere sollen ein Verfahren und eine Vorrichtung zur Wärmebehandlung eines metallischen Bauteils angegeben werden, die in der industriellen Serienfertigung die Herstellung eines pressgehärteten Bauteils mit möglichst präzisen Konturen erlauben. Zudem sollen das Verfahren und die Vorrichtung möglichst energiekostenschonend ausführbar beziehungsweise betreibbar und/oder möglichst investitionskostenschonend realisierbar beziehungsweise herstellbar sein. Darüber hinaus sollen das Verfahren sowie die Vorrichtung insbesondere eine möglichst geringe Taktzeit erlauben.

Diese Aufgaben werden gelöst durch die Merkmale der unabhängigen Patentansprüche. Das erfindungsgemäße Verfahren zur Wärmebehandlung eines Bauteils aus Stahl ist in dem unabhängigen Verfahrensanspruch 1 definiert.

Die erfindungsgemäße Vorrichtung zur Wärmebehandlung eines Bauteils aus Stahl ist in den unabhängigen Vorrichtungsanspruch 6 definiert.

Weitere vorteilhafte Ausgestaltungen der hier vorgeschlagenen Lösung sind in den abhängigen Patentansprüchen angegeben. Es ist darauf hinzuweisen, dass die in den abhängigen Patentansprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Ein erfindungsgemäßes Verfahren zur Wärmebehandlung eines Bauteils aus Stahl weist zumindest folgende Schritte auf, die in der angegebenen Reihenfolge durchgeführt werden:
a) Erwärmen des Bauteils,
b) Einstellen einer Temperaturdifferenz von mindestens 50 K zwischen mindestens einem ersten Teilbereich und mindestens einem zweiten Teilbereich des Bauteils,
b') Eintragen von Wärmeenergie mittels Strahlungswärme in das gesamte Bauteil,
c) zumindest teilweises Umformen und/oder Kühlen des Bauteils in einem Presshärtewerkzeug,
d) mechanisches Nachbearbeiten des mindestens einen ersten Teilbereichs des Bauteils,
wobei das Einstellen der Temperaturdifferenz in Schritt b) durch Kühlen des mindestens einen ersten Teilbereichs und/oder Erwärmen des mindestens einen zweiten Teilbereichs erfolgt, und wobei der nachzubearbeitende mindestens eine erste Teilbereich vor Schritt d) und zum Zeitpunkt der mechanischen Nachbearbeitung eine im Vergleich zum mindestens einen zweiten Teilbereich geringere Festigkeit erhält.

Die angedeutete Reihenfolge der Verfahrensschritte a), b), b'), c) und d) ergibt sich bei einem Ablauf des Verfahrens. Bevorzugt wird das Verfahren mit einer hier vorgestellten Vorrichtung durchgeführt. Das vorgeschlagene Verfahren dient zum Herstellen eines pressgehärteten Bauteils mit möglichst präzisen Konturen.

Das vorgeschlagene Verfahren erlaubt in besonders vorteilhafter Weise die Herstellung eines pressgehärteten Bauteils mit möglichst präzisen Konturen in der industriellen Serienfertigung. Dies wird insbesondere dadurch ermöglicht, dass das Bauteil vor dem Nachbearbeiten eine partiell unterschiedliche Wärmebehandlung derart erfährt, dass ein gegebenenfalls nachzubearbeitender Bereich des Bauteils eine geringere Festigkeit erhält, als zumindest ein anderer Bereich des Bauteils. Dies erlaubt den Vorteil, dass das Nachbearbeiten, insbesondere ohne hohen Werkzeugverschleiß, mechanisch ausgeführt werden kann, sodass ein energiekosten- sowie investitionskostenintensives Laserschneiden entfallen kann. Das mechanische Nachbearbeiten kann vergleichsweise schnell erfolgen, sodass das Verfahren darüber hinaus insbesondere eine möglichst kurze Taktzeit erlaubt.

Bei dem metallischen Bauteil aus Stahl handelt es sich vorzugsweise um eine Platine, ein Stahlblech oder ein zumindest teilweise vorgeformtes Halbzeug. Das metallische Bauteil ist mit beziehungsweise aus einem (härtbaren) Stahl, beispielweise einem Bor-(Mangan-)Stahl, z. B. mit der Bezeichnung 22MnB5, gebildet. Weiter bevorzugt ist das Bauteil zumindest zu einem Großteil mit einer (metallischen) Beschichtung versehen beziehungsweise vorbeschichtet. Bei der metallischen Beschichtung kann es sich beispielsweise um eine (vorrangig) Zink enthaltende Beschichtung oder eine (vorrangig) Aluminium und/oder Silizium enthaltende Beschichtung, insbesondere eine sogenannte Aluminium/Silizium(Al/Si)-Beschichtung handeln.

In Schritt a) wird das (ganze) Bauteil, insbesondere in einem ersten Ofen erwärmt. Bevorzugt wird das Bauteil im ersten Ofen homogen, uniform und/oder gleichmäßig aufgeheizt. Weiter bevorzugt wird das Bauteil im ersten Ofen (ausschließlich) mittels Strahlungswärme, beispielsweise von mindestens einem elektrisch betriebenen (das Bauteil nicht körperlich und/oder elektrisch kontaktierendem) Heizelement, wie beispielsweise einer Heizschleife und/oder einem Heizdraht, und/oder von mindestens einem (gasbeheizten) Strahlrohr erwärmt.

Nach einer vorteilhaften Ausgestaltung wird vorgeschlagen, dass das Bauteil in Schritt a) mittels Strahlungswärme und/oder Konvektion um mindestens 500 K [Kelvin], bevorzugt um mindestens 700 K oder sogar um mindestens 800 K erwärmt wird. Bevorzugt wird das in Schritt a) kontaktlos, insbesondere ohne wärmeleitenden oder elektrischen Kontakt zu einem elektrisch betriebenen Heizelement erwärmt.

Vorzugsweise wird das Bauteil in Schritt a) auf eine Temperatur unterhalb der AC3-Temperatur oder sogar unterhalb der AC1-Temperatur erwärmt. Die AC1-Temperatur ist die Temperatur, ab der die Gefügeumwandlung von Ferrit hin zu Austenit bei einem Erwärmen eines Bauteils aus Stahl beginnt. Die AC3-Temperatur ist die Temperatur, bei der die Gefügeumwandlung von Ferrit hin zu Austenit bei einem Erwärmen eines Bauteils aus Stahl endet beziehungsweise (vollständig) abgeschlossen ist. Alternativ kann das Bauteil in Schritt a) auf eine Temperatur oberhalb der AC3-Temperatur erwärmt werden.

Bevorzugt wird das Bauteil nach Schritt a) und vor Schritt b) in eine Temperierstation bewegt. Hierzu kann eine Transporteinrichtung, beispielsweise zumindest umfassend einen Rollentisch und/oder einen (Industrie-)Roboter vorgesehen sein. Besonders bevorzugt wird das Bauteil von einem ersten Ofen in eine Temperierstation bewegt. Insbesondere legt das Bauteil von dem ersten Ofen bis hin zur Temperierstation eine Wegstrecke von mindestens 0,5 m [Meter] zurück. Hierbei kann das Bauteil im Kontakt mit der Umgebungsluft oder innerhalb einer Schutzatmosphäre geführt werden.

Erfindungsgemäß ist vorgesehen, dass das Einstellen der Temperaturdifferenz in Schritt b) durch Kühlen des mindestens einen ersten Teilbereichs und/oder Erwärmen des mindestens einen zweiten Teilbereichs erfolgt. Bevorzugt erfolgt in Schritt b) ein partielles, aktives, konduktives und/oder konvektives Kühlen des mindestens einen ersten Teilbereichs des Bauteils, insbesondere in einer Temperierstation. Nach dem Kühlen weist das Bauteil partiell unterschiedliche (Bauteil-)Temperaturen auf, wobei eine Temperaturdifferenz zwischen einer ersten Temperatur des mindestens einen ersten Teilbereichs und einer zweiten Temperatur des mindestens einen zweiten Teilbereichs des Bauteils eingestellt ist. Darüber hinaus können in Schritt b) mehrere (verschiedene) Temperaturdifferenzen zwischen Teilbereichen des Bauteils eingestellt werden. So ist es beispielsweise möglich, in dem Bauteil drei oder mehr Teilbereiche mit jeweils voneinander verschiedenen Temperaturen einzustellen.

Bevorzugt findet das Einstellen der Temperaturdifferenz in Schritt b) derart statt, dass eine (erste) Temperatur des mindestens einen ersten Teilbereichs des Bauteils geringer ist als eine (zweite) Temperatur des mindestens einen zweiten Teilbereichs desselben Bauteils. In Schritt b) wird eine Temperaturdifferenz von mindestens 50 K, bevorzugt von mindestens 100 K oder sogar von mindestens 150 K zwischen dem mindestens einen ersten Teilbereich und mindestens einem zweiten Teilbereich des Bauteils eingestellt. Bei dem ersten Teilbereich handelt es sich regelmäßig um einen im fertig behandelten Bauteil duktileren Teilbereich beziehungsweise um einen Teilbereich, der eine (im Vergleich zum zweiten Teilbereich) geringere Festigkeit erhält. Bei dem zweiten Teilbereich handelt es sich regelmäßig um einen im fertig behandelten Bauteil im Vergleich dazu härteren Teilbereich beziehungsweise um einen Teilbereich, der eine (im Vergleich zum ersten Teilbereich) höhere Festigkeit erhält.

Wenn in Schritt b) ein (aktives) Kühlen des mindestens einen ersten Teilbereichs vorgesehen ist, erfolgt dieses bevorzugt konvektiv, besonders bevorzugt mittels mindestens einer ein Fluid austragenden Düse. Hierzu kann die Düse in der Temperierstation angeordnet und hin zu dem ersten Teilbereich ausgerichtet sein. Bei dem Fluid kann es sich beispielsweise um Luft, Stickstoff, Wasser oder einem Gemisch hiervon handeln. Bevorzugt erfolgt das Kühlen mittels eines Düsenfelds mit mehreren, jeweils ein Fluid austragenden Düsen, wobei besonders bevorzugt die Form des Düsenfelds und/oder die Anordnung der mehreren Düsen an die (zu erzielende) Geometrie des mindestens einen ersten Teilbereichs des Bauteils angepasst ist.

Vorzugsweise kühlt der mindestens eine erste Teilbereich in Schritt b) auf eine Temperatur unterhalb der AC1-Temperatur ab. Besonders bevorzugt wird der mindestens eine erste Teilbereich in Schritt b) auf eine Temperatur unterhalb der AC1-Temperatur (aktiv) gekühlt. Bevorzugt wird der mindestens eine erste Teilbereich in Schritt b) auf eine Temperatur unterhalb von 550°C [Grad Celsius] (823,15 K), besonders bevorzugt unterhalb von 500°C (773,15 K) oder sogar unterhalb von 450°C (723,15 K) gekühlt.

Insbesondere alternativ zu einem (aktiven) Kühlen des mindestens einen ersten Teilbereichs, kann das Einstellen der Temperaturdifferenz zwischen dem mindestens einen ersten Teilbereich und dem mindestens einen zweiten Teilbereich des Bauteils (auch) dadurch erfolgen, dass der mindestens eine erste Teilbereich zumindest teilweise thermisch isoliert, getrennt, abgegrenzt und/oder abgeschottet wird. Bevorzug wird der mindestens eine erste Teilbereich (hierbei), insbesondere mittels mindestens einer Abdeckung, Blende und/oder Trennwand, thermisch von dem mindestens einen zweiten Teilbereich und/oder von einer Wärmequelle, wie etwa einem (elektrischen) Heizelement zumindest teilweise isoliert, getrennt, abgegrenzt und/oder abgeschottet. Insbesondere wenn der mindestens eine erste Teilbereich des Bauteils nicht aktiv gekühlt wird, ist es besonders bevorzugt, dass in Schritt b) mindestens ein dritter Teilbereich des Bauteils aktiv, beispielsweise konvektiv und/oder konduktiv gekühlt und/oder (aktiv) Wärmeenergie in den mindestens einen zweiten Teilbereich des Bauteils eingetragen wird. So kann in dem dritten Teilbereich eine (noch) geringere Festigkeit eingestellt werden, als in dem ersten Teilbereich. Vorzugsweise wird in Schritt b) mindestens ein dritter Teilbereich des Bauteils um mindestens 50 K, bevorzugt um mindestens 100 K oder sogar um mindestens 150 K gekühlt.

Bevorzugt erfolgt in Schritt b), insbesondere in einer Temperierstation und/oder gleichzeitig oder zumindest teilweise parallel zu einem (aktiven) Kühlen oder einem passiven Kühlen beziehungsweise Abkühlen-Lassen des mindestens einen ersten Teilbereichs des Bauteils, ein Eintragen von Wärmeenergie in den mindestens einen zweiten Teilbereich des Bauteils. Vorzugsweise wird der mindestens eine zweite Teilbereich des Bauteils während Schritt b) und/oder in der Temperierstation (ausschließlich) mit einer Wärmestrahlung beaufschlagt, die beispielsweise von mindestens einem elektrisch betriebenen beziehungsweise aufgeheizten, insbesondere in der Temperierstation angeordneten, (das Bauteil nicht kontaktierenden) Heizelement, wie beispielsweise einer Heizschleife und/oder einem Heizdraht, und/oder von mindestens einem, insbesondere in der Temperierstation angeordneten, (gasbeheizten) Strahlrohr erzeugt und/oder abgestrahlt wird.

Das Eintragen von Wärmeenergie in den mindestens einen zweiten Teilbereich des Bauteils kann derart erfolgen, dass eine Temperaturabnahme der Temperatur des mindestens einen zweiten Teilbereichs und/oder eine Abkühlgeschwindigkeit des mindestens einen zweiten Teilbereichs während Schritt b) und/oder während des Verbleibs des Bauteils in der Temperierstation zumindest reduziert wird. Diese Verfahrensführung ist insbesondere dann vorteilhaft, wenn das Bauteil in Schritt a) auf eine Temperatur oberhalb der AC3-Temperatur erwärmt wurde. Alternativ kann das Eintragen von Wärmeenergie in den mindestens einen zweiten Teilbereich des Bauteils in der Temperierstation derart erfolgen, dass der mindestens eine zweite Teilbereich des Bauteils (deutlich) erwärmt, insbesondere um mindestens ca. 50 K aufgeheizt, wird. Diese Verfahrensführung ist insbesondere dann vorteilhaft, wenn das Bauteil in Schritt a) auf eine Temperatur unterhalb der AC3-Temperatur oder sogar unterhalb der AC1-Temperatur erwärmt wurde.

Bevorzugt wird das Bauteil nach Schritt b) und vor Schritt c) in einen zweiten Ofen bewegt. Besonders bevorzugt wird das Bauteil (hierbei) von der Temperierstation in einen zweiten Ofen bewegt. Hierzu kann eine Transporteinrichtung, beispielsweise zumindest umfassend einen Rollentisch und/oder einen (Industrie-) Roboter vorgesehen sein. Bevorzugt legt das Bauteil von der Temperierstation bis hin zu dem zweiten Ofen eine Wegstrecke von mindestens 0,5 m zurück. Hierbei kann das Bauteil im Kontakt mit der Umgebungsluft oder innerhalb einer Schutzatmosphäre geführt werden. Bevorzugt wird das Bauteil unmittelbar nach einer Entnahme aus der Temperierstation direkt in den zweiten Ofen verbracht.

Vorzugsweise erfolgt nach Schritt b) und vor Schritt c) ein Erwärmen zumindest des mindestens einen ersten Teilbereichs des Bauteils, insbesondere in einem zweiten Ofen, bevorzugt um mindestens 50 K, besonders bevorzugt um mindestens 100 K oder sogar um mindestens 150 K. Alternativ oder zusätzlich kann nach Schritt b) und vor Schritt c) ein Erwärmen mindestens eines dritten Teilbereichs des Bauteils erfolgen, insbesondere in einem zweiten Ofen, bevorzugt um mindestens 100 K, besonders bevorzugt um mindestens 150 K oder sogar um mindestens 200 K. Wenn das Erwärmen des mindestens einen dritten Teilbereichs zusätzlich zu dem Erwärmen des mindestens einen ersten Teilbereichs erfolgt, können diese Erwärmungsvorgänge gleichzeitig oder zumindest teilweise parallel erfolgen.

Besonders bevorzugt wird zumindest der mindestens eine erste Teilbereich oder mindestens ein dritter Teilbereich des Bauteils im zweiten Ofen (ausschließlich) mittels Strahlungswärme, beispielsweise von mindestens einem elektrisch betriebenen (das Bauteil nicht kontaktierenden) Heizelement, wie beispielsweise einer Heizschleife und/oder einem Heizdraht, und/oder von mindestens einem (gasbeheizten) Strahlrohr erwärmt. Weiter bevorzugt wird, insbesondere gleichzeitig oder zumindest teilweise parallel zum Erwärmen des mindestens einen ersten Teilbereichs und/oder des mindestens einen dritten Teilbereichs, der mindestens eine zweite Teilbereich des Bauteils in dem zweiten Ofen um mindestens 50 K, besonders bevorzugt um mindestens 70 K oder sogar um mindestens 100 K, insbesondere (ausschließlich) mittels Strahlungswärme, erwärmt. Besonders bevorzugt wird der mindestens eine zweite Teilbereich des Bauteils im zweiten Ofen auf eine Temperatur oberhalb der AC1-Temperatur oder sogar oberhalb der AC3-Temperatur erwärmt. Alternativ wird, insbesondere gleichzeitig oder zumindest teilweise parallel zum Erwärmen des mindestens einen ersten Teilbereichs und/oder des mindestens einen dritten Teilbereichs, eine Temperaturabnahme der Temperatur des mindestens einen zweiten Teilbereichs und/oder eine Abkühlgeschwindigkeit des mindestens einen zweiten Teilbereichs während des Verbleibs des Bauteils in dem zweiten Ofen zumindest reduziert.

Erfindungssgemäß erfolgt nach Schritt b) und vor Schritt c) ein Eintragen von Wärmeenergie mittels Strahlungswärme in das gesamte Bauteil. Beispielsweise kann hierzu ein zweiter Ofen vorgesehen sein, der einen (ausschließlich) mittels Strahlungswärme beheizbaren Ofeninnenraum aufweisen kann, in dem vorzugsweise eine (nahezu) einheitliche Innentemperatur einstellbar ist. Das Eintragen von Wärmeenergie in den mindestens einen ersten Teilbereich des Bauteils erfolgt in dem zweiten Ofen vorzugsweise derart, dass die Temperatur des mindestens einen ersten Teilbereichs um mindestens 50 K, bevorzugt um mindestens 100 K, besonders bevorzugt um mindestens 150 K oder sogar um mindestens 200 K erhöht wird. Wenn mindestens ein dritter Teilbereich vorhanden ist, erfolgt das Eintragen von Wärmeenergie in den mindestens einen dritten Teilbereich des Bauteils in dem zweiten Ofen vorzugsweise derart, dass die Temperatur des mindestens einen dritten Teilbereichs um mindestens 100 K, bevorzugt um mindestens 120 K, besonders bevorzugt um mindestens 150 K oder sogar um mindestens 200 K erhöht wird.

Das Eintragen von Wärmeenergie in den mindestens einen zweiten Teilbereich des Bauteils kann in dem zweiten Ofen vorzugsweise derart erfolgen, dass eine Temperaturabnahme der Temperatur des mindestens einen zweiten Teilbereichs und/oder eine Abkühlgeschwindigkeit des mindestens einen zweiten Teilbereichs während des Verbleibs des Bauteils in dem zweiten Ofen zumindest reduziert wird. Diese Verfahrensführung ist insbesondere dann vorteilhaft, wenn das Bauteil in Schritt a) auf eine Temperatur oberhalb der AC3-Temperatur erwärmt wurde. Alternativ kann das Eintragen von Wärmeenergie in den mindestens einen zweiten Teilbereich des Bauteils im zweiten Ofen derart erfolgen, dass der mindestens eine zweite Teilbereich des Bauteils zumindest (deutlich) erwärmt, insbesondere um mindestens 50 K, besonders bevorzugt um mindestens 70 K oder sogar um mindestens 100 K; und/oder auf eine Temperatur oberhalb der AC1-Temperatur oder sogar oberhalb der AC3-Temperatur aufgeheizt wird. Diese Verfahrensführung ist insbesondere dann vorteilhaft, wenn das Bauteil in Schritt a) auf eine Temperatur unterhalb der AC3-Temperatur oder sogar unterhalb der AC1-Temperatur erwärmt wurde.

Wenn ein zweiter Ofen vorgesehen ist, erfolgt vor Schritt c) bevorzugt ein Bewegen des Bauteils von dem zweiten Ofen in das Presshärtewerkzeug. Bevorzugt erfolgt das Bewegen von dem zweiten Ofen in das Presshärtewerkzeug mittels einer Transporteinrichtung, beispielsweise zumindest umfassend einen Rollentisch und/oder eine Handhabungseinrichtung, insbesondere einen (Industrie-)

Roboter. Besonders bevorzugt legt das Bauteil von dem zweiten Ofen bis hin zu dem Presshärtewerkzeug eine Wegstrecke von mindestens 0,5 m zurück. Hierbei kann das Bauteil im Kontakt mit der Umgebungsluft oder innerhalb einer Schutzatmosphäre geführt werden. Bevorzugt wird das Bauteil unmittelbar nach einer Entnahme aus dem zweiten Ofen direkt in das Presshärtewerkzeug verbracht.

In Schritt d) erfolgt ein (rein beziehungsweise ausschließlich) mechanisches Nachbearbeiten, insbesondere Beschneiden des mindestens einen ersten Teilbereichs des Bauteils. Bevorzugt umfasst das mechanische Nachbearbeiten zumindest ein Trennen, Schneiden, Sägen, Fräsen und/oder Hobeln. Besonders bevorzugt erfolgt in Schritt d) ein mechanisches Schneiden in und/oder an dem mindestens einen ersten Teilbereich des Bauteils. Weiterhin bevorzugt erfolgt in Schritt d) ein mechanisches Beschneiden des Bauteils im Bereich des mindestens einen ersten Teilbereichs. Vorzugsweise umfasst das mechanische Nachbearbeiten ein Stanzen des mindestens einen ersten Teilbereichs des Bauteils. Besonders bevorzugt findet das Nachbearbeiten, insbesondere Beschneiden oder Stanzen derart statt, dass ein Großteil, insbesondere mindestens 70% oder sogar mindestens 85%, des ersten Teilbereichs des Bauteils entfernt und/oder von dem (restlichen) Bauteil getrennt wird. Weiterhin bevorzugt erfolgt in Schritt d) ein spanloses und/oder adiabates Trennen, insbesondere zumindest eines Großteils, insbesondere mindestens 70% oder sogar mindestens 85%, des ersten Teilbereichs des Bauteils (von dem (restlichen) Bauteil). Ein adiabatisches Trennen kann hierbei insbesondere als eine hochgeschwindigkeitsplastische Verformung in der Trennzone verstanden werden, welche insbesondere zu einer starken Erwärmung und somit Auflösung oder Erweichung des Gefüges führt. Aufgrund der bevorzugt hohen Geschwindigkeit des Trennvorgangs findet insbesondere (nahezu) kein Wärmeübergang in der Werkstoffrandzone (der Trennzone) statt.

Nach einer vorteilhaften Ausgestaltung wird vorgeschlagen, dass das mechanische Nachbearbeiten in Schritt d) mit mindestens einem mechanischen Schneidwerkzeug ausgeführt wird. Bevorzugt weist das mechanische Schneidwerkzeug mindestens zwei (relativ) aufeinander zu und/oder voneinander weg bewegbare Trennmittel und/oder Schneidmittel, wie etwa Schneiden beziehungsweise Klingen auf. Weiterhin bevorzugt handelt es sich bei dem Schneidwerkzeug um eine manuell geführte und/oder automatische Stahlschere. Besonders bevorzugt ist das Schneidwerkzeug elektrisch, pneumatisch und/oder hydraulisch antreibbar.

Nach einer vorteilhaften Ausgestaltung wird vorgeschlagen, dass das Bauteil während des mechanischen Nachbearbeitens in dem Presshärtewerkzeug gehalten wird. Bevorzugt erfolgt das mechanische Nachbearbeiten während das Bauteil in dem Presshärtewerkzeug festgehalten, festgeklemmt, eingespannt und/oder gepresst ist. Vorzugsweise erfolgt das mechanische Nachbearbeiten unmittelbar nach dem (von dem Presshärtewerkzeug durchgeführten) Umformen und/oder Kühlen. Insbesondere erfolgt das mechanische Nachbearbeiten in dem Presshärtewerkzeug.

Nach einer weiteren vorteilhaften Ausgestaltung wird vorgeschlagen, dass der mindestens eine erste Teilbereich des Bauteils einen Flanschbereich und/oder einen Bereich für eine Aussparung bildet. Bevorzugt bildet mindestens ein erster Teilbereich einen Fügeflansch des Bauteils. Weiterhin bevorzugt bildet der mindestens eine erste Teilbereich einen Randbereich des Bauteils. Besonders bevorzugt umläuft der Randbereich das gesamte Bauteil.

Weiterhin bevorzugt bildet der mindestens eine erste Teilbereich mindestens einen zumindest teilweise entlang einer (Außen-)Kontur des Bauteils beziehungsweise entlang eines (äußeren) Bauteilrands verlaufenden Streifen. Hierbei kann sich der Streifen (ausgehend von dem (äußeren) Bauteilrand beziehungsweise ausgehend von der (Außen-)Kontur) mindestens 0,005 m [Meter], bevorzugt mindestens 0,01 m oder sogar mindestens 0,1 m und/oder bis zu 0,3 m, vorzugsweise bis zu 0,2 m oder sogar bis zu 0,1 m hin zu einem Zentrum des Bauteils erstrecken. Der Streifen kann quer zu seiner Erstreckungsrichtung entlang der (Außen-)Kontur beziehungsweise entlang des (äußeren) Bauteilrands eine (homogene oder inhomogene) Streifenbreite von vorzugsweise 0,05 m bis 0,15 m, besonders bevorzugt von ca. 0,1 m aufweisen. Bevorzugt ist der Streifen entlang der gesamten (Außen-)Kontur des Bauteils beziehungsweise entlang des gesamten (äußeren) Bauteilrands gebildet. Somit kann das Bauteil mit einem duktileren Bauteilrand ausgeführt werden, der einen einfacheren Beschnitt der (Außen-)Kontur des Bauteils erlaubt.

Nach einem weiteren Aspekt wird eine Vorrichtung zur Wärmebehandlung eines Bauteils aus Stahl vorgeschlagen, die zumindest umfasst:
- einen beheizbaren ersten Ofen,
- mindestens eine Temperierstation, die dazu vorgesehen und eingerichtet ist, eine Temperaturdifferenz zwischen mindestens einem ersten Teilbereich und mindestens einem zweiten Teilbereich des Bauteils einzustellen,
- einen zweiten Ofen mit einem mittels Strahlungswärme beheizbaren Ofeninnenraum, wobei der zweite Ofen zum Eintragen von Wärmeenergie in das gesamte Bauteil aus Stahl eingerichtet ist,
- mindestens ein Presshärtewerkzeug,
- mindestens eine mechanische Nachbearbeitungseinrichtung, die dem Presshärtewerkzeug zugeordnet ist.

Bevorzugt ist der erste Ofen mittels Strahlungswärme und/oder Konvektion beheizbar. Der beheizbare zweite Ofen ist mittels Strahlungswärme beheizbar. Besonders bevorzugt ist der zweite Ofen der Temperierstation nachgeordnet. Darüber hinaus ist bevorzugt, dass der zweite Ofen dazu vorgesehen und eingerichtet ist zumindest den mindestens einen ersten Teilbereich oder mindestens einen dritten Teilbereich des Bauteils um mindestens 50 K, bevorzugt um mindestens 100 K, besonders bevorzugt um mindestens 150 K oder sogar um mindestens 200 K zu erwärmen.

Nach einer weiteren vorteilhaften Ausgestaltung wird vorgeschlagen, dass zumindest der erste Ofen oder der zweite Ofen ein Durchlaufofen oder ein Kammerofen ist. Bevorzugt ist der erste Ofen ein Durchlaufofen, insbesondere ein Rollenherdofen. Besonders bevorzugt ist der zweite Ofen ein Durchlaufofen, insbesondere ein Rollenherdofen, oder ein Kammerofen, insbesondere ein Mehrlagenkammerofen mit mindestens zwei übereinander angeordneten Kammern.

Bevorzugt weist der zweite Ofen einen (ausschliesslich) mittels Strahlungswärme beheizbaren Ofeninnenraum auf, in dem vorzugsweise eine (nahezu) einheitliche Innentemperatur einstellbar ist. Insbesondere wenn der zweite Ofen als Mehrlagenkammerofen ausgeführt ist, können, entsprechend der Anzahl der Kammern, mehrere solcher Ofeninnenräume vorhanden sein.

Bevorzugt sind in dem ersten Ofen und/oder in dem zweiten Ofen (ausschließlich) Strahlungswärmequellen angeordnet. Besonders bevorzugt ist in einem Ofeninnenraum des ersten Ofens und/oder in einem Ofeninnenraum des zweiten Ofens mindestens ein elektrisch betriebenes (das Bauteil nicht kontaktierende) Heizelement, wie beispielsweise mindestens eine elektrisch betriebene Heizschleife und/oder mindestens ein elektrisch betriebener Heizdraht angeordnet. Alternativ oder zusätzlich kann in dem Ofeninnenraum des ersten Ofens und/oder dem Ofeninnenraum des zweiten Ofens mindestens ein insbesondere gasbeheiztes Strahlrohr angeordnet sein. Vorzugsweise sind in dem Ofeninnenraum des ersten Ofens und/oder dem Ofeninnenraum des zweiten Ofens mehrere Strahlrohrgasbrenner beziehungsweise Strahlrohre angeordnet, in die jeweils mindestens ein Gasbrenner hineinbrennt. Hierbei ist es besonders vorteilhaft, wenn der innere Bereich der Stahlrohre, in den die Gasbrenner hineinbrennen, atmosphärisch von dem Ofeninnenraum getrennt ist, so dass keine Verbrennungsgase oder Abgase in den Ofeninnenraum gelangen und somit die Ofenatmosphäre beeinflussen können. Eine solche Anordnung wird auch als "indirekte Gasbeheizung" bezeichnet.

Bevorzugt ist die Temperierstation dem ersten Ofen nachgeordnet. In der Temperierstation kann mindestens eine Düse angeordnet beziehungsweise gehalten sein, die zum Austragen eines Fluids vorgesehen und eingerichtet ist. Vorzugsweise ist die mindestens eine Düse zum Austragen eines Fluids zum Kühlen des mindestens einen ersten Teilbereichs und/oder mindestens eines dritten Teilbereichs des Bauteils vorgesehen und eingerichtet. So ist eine Temperaturdifferenz zwischen dem mindestens einen ersten Teilbereich beziehungsweise dem mindestens einen dritten Teilbereich und mindestens einem zweiten Teilbereich des Bauteils besonders vorteilhaft einstellbar. Besonders bevorzugt ist die mindestens eine Düse derart ausgerichtet, dass sie das Fluid hin zu dem ersten Teilbereich und/oder einem dritten Teilbereich des Bauteils austragen kann. Weiter bevorzugt ist in der Temperierstation ein Düsenfeld mit mehreren Düsen angeordnet, wobei die Düsen jeweils zum Austragen eines Fluids vorgesehen und eingerichtet sind. Besonders bevorzugt ist eine Form des Düsenfelds und/oder eine Anordnung der mehreren Düsen an die (zu erzielende) Geometrie des mindestens einen ersten Teilbereichs und/oder des mindestens einen dritten Teilbereichs des Bauteils angepasst.

Bevorzugt ist in der Temperierstation mindestens eine Erwärmungseinrichtung angeordnet. Vorzugsweise ist die Erwärmungseinrichtung dazu vorgesehen und eingerichtet, Wärmeenergie in den mindestens einen zweiten Teilbereich des Bauteils einzutragen. Besonders bevorzugt ist die Erwärmungseinrichtung derart in der Temperierstation angeordnet und/oder ausgerichtet, dass das Eintragen von Wärmeenergie in den mindestens einen zweiten Teilbereich des Bauteils gleichzeitig oder zumindest teilweise parallel zu dem Kühlen des mindestens einen ersten Teilbereichs und/oder mindestens eines dritten Teilbereichs des Bauteils mittels der mindestens einen Düse ausführbar ist. Bevorzugt umfasst die Erwärmungseinrichtung (ausschließlich) mindestens eine Strahlungswärmequelle. Besonders bevorzugt ist die mindestens eine Strahlungswärmequelle mit mindestens einem elektrisch betriebenen (das Bauteil nicht (mechanisch und/oder elektrisch) kontaktierenden) Heizelement, wie beispielsweise mindestens einer elektrisch betriebenen Heizschleife und/oder mindestens einem elektrisch betriebenen Heizdraht gebildet. Alternativ oder zusätzlich kann als Strahlungswärmequelle mindestens ein gasbeheiztes Strahlrohr vorgesehen sein.

Vorzugsweise ist das Presshärtewerkzeug einem zweiten Ofen nachgeordnet. Dass Presshärtewerkzeug ist insbesondere dazu vorgesehen und eingerichtet, das Bauteil gleichzeitig oder zumindest teilweise parallel umzuformen und (zumindest teilweise) zu kühlen, insbesondere abzuschrecken.

Die mindestens eine mechanische Nachbearbeitungseinrichtung ist dem Presshärtewerkzeug zugeordnet. Bevorzugt ist die Nachbearbeitungseinrichtung im Bereich des Presshärtewerkzeugs anordenbar beziehungsweise angeordnet. Besonders bevorzugt ist die Nachbearbeitungseinrichtung hin zu dem Presshärtewerkzeug ausrichtbar beziehungsweise ausgerichtet. Weiterhin bevorzugt ist die Nachbearbeitungseinrichtung derart mit dem Presshärtewerkzeug, insbesondere elektronisch, mechanisch, pneumatisch, hydraulisch und/oder signaltechnisch, verbunden, dass die Nachbearbeitungseinrichtung mit dem Presshärtewerkzeug zusammenwirkt. Die Nachbearbeitungseinrichtung kann eine (von dem Presshärtewerkzeug) separate Einrichtung darstellen oder zumindest teilweise in das Presshärtewerkzeug integriert und/oder fest mit dem Presshärtewerkzeug verbunden sein. Die Nachbearbeitungseinrichtung kann (hierzu) beispielsweise ein Nachbearbeitungswerkzeug, insbesondere ein Trennwerkzeug, Stanzwerkzeug und/oder Schneidwerkzeug, aufweisen, das vorzugsweise an oder in dem Presshärtewerkzeug, insbesondere an einer Oberschale und/oder einer Unterschale des Presshärtewerkzeugs, angeformt beziehungsweise gebildet ist oder das fest mit dem Presshärtewerkzeug verbunden ist. So kann ein erster Teil eines Nachbearbeitungswerkzeugs, insbesondere eine erste Schneide, mit einer Oberschale des Presshärtewerkzeugs und/oder ein zweiter Teil eines Nachbearbeitungswerkzeugs, insbesondere eine zweite Schneide, mit einer Unterschale des Presshärtewerkzeugs (direkt und/oder fest) verbunden sein.

Nach einer vorteilhaften Ausgestaltung wird vorgeschlagen, dass die mindestens eine mechanische Nachbearbeitungseinrichtung mindestens ein mechanisches Schneidwerkzeug aufweist.

Bevorzugt dient die Vorrichtung zur Durchführung eines hier vorgeschlagenen Verfahrens. Nach einer vorteilhaften Ausgestaltung wird vorgeschlagen, dass die Vorrichtung zum Ausüben eines hier vorgeschlagenen Verfahrens vorgesehen und eingerichtet ist.

Die im Zusammenhang mit dem Verfahren erörterten Details, Merkmale und vorteilhaften Ausgestaltungen können entsprechend auch bei der hier vorgestellten Vorrichtung auftreten und umgekehrt. Insoweit wird auf die dortigen Ausführungen zur näheren Charakterisierung der Merkmale vollumfänglich Bezug genommen.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen schematisch:
- Fig. 1:: ein Schaubild einer Vorrichtung zur Wärmebehandlung eines metallischen Bauteils, und
- Fig. 2:: eine Draufsicht auf ein metallisches Bauteil.

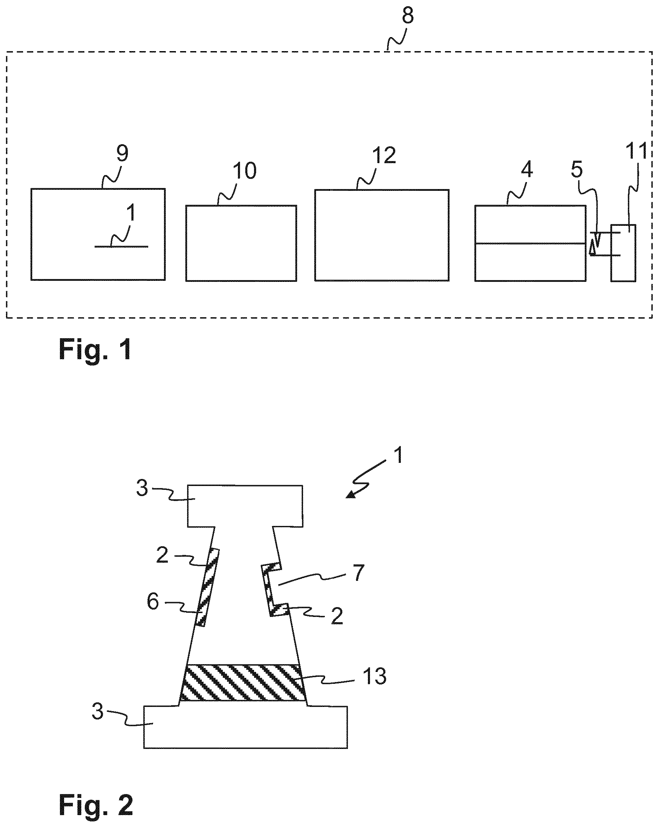

Fig. 1 zeigt schematisch ein Schaubild einer Vorrichtung 8 zur Wärmebehandlung eines metallischen Bauteils 1. Die Vorrichtung 8 weist einen ersten Ofen 9, eine Temperierstation 10 und ein Presshärtewerkzeug 4 auf. Beispielhaft ist zwischen der Temperierstation 10 und dem Presshärtewerkzeug 4 ein zweiter Ofen 12 vorgesehen. Die Vorrichtung 8 stellt hier eine Warmformlinie für das Presshärten dar. Die Temperierstation 10 ist dem ersten Ofen 9 (direkt) nachgeordnet, sodass ein mittels der Vorrichtung 8 zu behandelndes Bauteil 1 nach Verlassen des ersten Ofens 6 direkt in die Temperierstation 10 verbracht werden kann. Ferner sind der zweite Ofen 12 der Temperierstation 10 und das Presshärtewerkzeug 4 dem zweiten Ofen 12 (direkt) nachgeordnet.

Zudem umfasst die in Fig. 1 dargestellte Vorrichtung eine mechanische Nachbearbeitungseinrichtung 11, die dem Presshärtewerkzeug 4 zugeordnet ist. Die mechanische Nachbearbeitungseinrichtung 11 weist ein Schneidwerkzeug 5 auf, mit dem das metallische Bauteil 1 zumindest teilweise beschneidbar ist.

Fig. 2 zeigt schematisch eine Draufsicht eines metallischen Bauteils 1 mit zwei ersten Teilbereichen 2 und zwei zweiten Teilbereichen 3. Erfindungsgemäß ist das Bauteil aus Stahl. Darüber hinaus weist das Bauteil beispielhaft einen dritten Teilbereich 13 auf. Das Bauteil 1 ist hier in einem Zustand nach dem Presshärten gezeigt. In den zweiten Teilbereichen 3 ist das Bauteil 1 (vollständig martensitisch) gehärtet. Somit weist das Bauteil 1 in den zweiten Teilbereichen 3 eine hohe Festigkeit auf. Demgegenüber weist das Bauteil 1 in den ersten Teilbereichen eine geringere Festigkeit auf. Die geringste Festigkeit weist das Bauteil 1 jedoch in dem dritten Teilbereich 13 auf. So kann der dritte Teilbereich 13 beispielsweise zum Aufnehmen einer auf das Bauteil 1 einwirkenden Stoßenergie dienen.

Gemäß der Darstellung nach Fig. 2 bildet einer der ersten Teilbereiche 2 des Bauteils 1 einen Flanschbereich 6 und ein weiterer der ersten Teilbereiche 2 einen Bereich für eine Aussparung 7. Da die ersten Teilbereiche 2 eine gegenüber den (vollständig martensitisch) gehärteten zweiten Teilbereichen 3 reduzierte Festigkeit aufweisen, lassen sich der Flanschbereich 6 sowie der Bereich für die Aussparung 7 gut mechanisch beschneiden. In Fig. 2 ist der Flanschbereich 6 noch nicht mechanische nachbearbeitet. Der Bereich für die Aussparung 7 ist jedoch bereits mechanisch nachbearbeitet, sodass die Aussparung 7 in Fig. 2 zu erkenn ist.

Es werden ein Verfahren und eine Vorrichtung zur Wärmebehandlung eines Bauteils aus Stahl angegeben, die die mit Bezug auf den Stand der Technik geschilderten Probleme zumindest teilweise lösen. Insbesondere erlauben das Verfahren und die Vorrichtung die Herstellung eines pressgehärteten Bauteils mit möglichst präzisen Konturen in der industriellen Serienfertigung. Zudem sind das Verfahren und die Vorrichtung möglichst energiekostenschonend ausführbar bzw. betreibbar und/oder möglichst investitionskostenschonend realisierbar bzw. herstellbar. Darüber hinaus erlauben das Verfahren sowie die Vorrichtung insbesondere eine möglichst geringe Taktzeit.

### Bezugszeichenliste

- 1: Bauteil
- 2: erster Teilbereich
- 3: zweiter Teilbereich
- 4: Presshärtewerkzeug
- 5: Schneidwerkzeug
- 6: Flanschbereich
- 7: Aussparung
- 8: Vorrichtung
- 9: erster Ofen
- 10: Temperierstation
- 11: Nachbearbeitungseinrichtung
- 12: zweiter Ofen
- 13: dritter Teilbereich

## Patentansprüche

1. Verfahren zur Wärmebehandlung eines Bauteils (1) aus Stahl mit zumindest folgenden Schritten, die in der angegebenen Reihenfolge durchgeführt werden:
a) Erwärmen des Bauteils (1),
b) Einstellen einer Temperaturdifferenz von mindestens 50 K zwischen mindestens einem ersten Teilbereich (2) und mindestens einem zweiten Teilbereich (3) des Bauteils (1),
b') Eintragen von Wärmeenergie mittels Strahlungswärme in das gesamte Bauteil (1),
c) zumindest teilweises Umformen und/oder Kühlen des Bauteils (1) in einem Presshärtewerkzeug (4),
d) mechanisches Nachbearbeiten des mindestens einen ersten Teilbereichs (2) des Bauteils (1),
wobei das Einstellen der Temperaturdifferenz in Schritt b) durch Kühlen des mindestens einen ersten Teilbereichs (2) und/oder Erwärmen des mindestens einen zweiten Teilbereichs (3) erfolgt, und wobei der nachzubearbeitende mindestens eine erste Teilbereich (2) vor Schritt d) und zum Zeitpunkt der mechanischen Nachbearbeitung eine im Vergleich zum mindestens einen zweiten Teilbereich (3) geringere Festigkeit erhält.

2. Verfahren nach Anspruch 1, wobei das Bauteil in Schritt a) mittels Strahlungswärme und/oder Konvektion um mindestens 500 K erwärmt wird.

3. Verfahren nach einem der vorhergehenden Ansprüche, wobei das mechanische Nachbearbeiten in Schritt d) mit mindestens einem mechanischen Schneidwerkzeug (5) ausgeführt wird.

4. Verfahren nach einem der vorhergehenden Ansprüche, wobei das Bauteil (1) während des mechanischen Nachbearbeitens in dem Presshärtewerkzeug (4) gehalten wird.

5. Verfahren nach einem der vorhergehenden Ansprüche, wobei der mindestens eine erste Teilbereich (2) des Bauteils (1) einen Flanschbereich (6) und/oder einen Bereich für eine Aussparung (7) bildet.

6. Vorrichtung (8) zur Wärmebehandlung eines Bauteils (1) aus Stahl, zumindest umfassend:
- einen beheizbaren ersten Ofen (9),
- mindestens eine Temperierstation (10), die dazu vorgesehen und eingerichtet ist, eine Temperaturdifferenz zwischen mindestens einem ersten Teilbereich (2) und mindestens einem zweiten Teilbereich (3) des Bauteils (1) einzustellen,
- einen zweiten Ofen (12) mit einem mittels Strahlungswärme beheizbaren Ofeninnenraum, wobei der zweite Ofen (12) zum Eintragen von Wärmeenergie in das gesamte Bauteil aus Stahl (1) eingerichtet ist,
- mindestens ein Presshärtewerkzeug (4),
- mindestens eine mechanische Nachbearbeitungseinrichtung (11), die dem Presshärtewerkzeug (4) zugeordnet ist.

7. Vorrichtung nach Anspruch 6, wobei die mindestens eine mechanische Nachbearbeitungseinrichtung (11) mindestens ein mechanisches Schneidwerkzeug (5) aufweist.

8. Vorrichtung nach Anspruch 6 oder 7, wobei die Vorrichtung (8) zum Ausüben eines Verfahrens nach einem der Ansprüche 1 bis 6 vorgesehen und eingerichtet ist.

## Claims

1. Method for thermally treating a steel component (1) comprising at least the following steps, carried out in the stated order:
a) heating the component (1),
b) setting a temperature difference of at least 50 K between at least one first partial region (2) and at least one second partial region (3) of the component (1), b') feeding heat energy into the entire component (1) by means of radiant heat,
c) at least partially forming and/or cooling the component (1) in a press hardening tool (4),
d) mechanically reworking the at least one first partial region (2) of the component (1),
wherein the setting of the temperature difference in step b) is carried out by cooling the at least one first partial region (2) and/or heating the at least one second partial region (3), and wherein the at least one first partial region (2) that is to be reworked is provided with a lower strength than the at least one second partial region (3) before step d) and at the time of the mechanical reworking.

2. Method according to Claim 1, wherein the component is heated by at least 500 K by means of radiant heat and/or convection in step a).

3. Method according to either of the preceding claims, wherein the mechanical reworking in step d) is carried out with at least one mechanical cutting tool (5).

4. Method according to one of the preceding claims, wherein the component (1) is kept in the press hardening tool (4) during the mechanical reworking.

5. Method according to one of the preceding claims, wherein the at least one first partial region (2) of the component (1) forms a flange region (6) and/or a region for a cutout (7).

6. Apparatus (8) for thermally treating a steel component (1), at least comprising:
- a heatable first furnace (9),
- at least one temperature control station (10), which is designed and configured to set a temperature difference between at least one first partial region (2) and at least one second partial region (3) of the component (1),
- a second furnace (12) which has a furnace interior heatable by means of radiant heat, wherein the second furnace (12) is configured to feed heat energy into the entire steel component (1),
- at least one press hardening tool (4),
- at least one mechanical reworking device (11) assigned to the press hardening tool (4).

7. Apparatus according to Claim 6, wherein the at least one mechanical reworking device (11) has at least one mechanical cutting tool (5).

8. Apparatus according to Claim 6 or 7, wherein the apparatus (8) is designed and configured to carry out a method according to one of Claims 1 to 6.

## Revendications

1. Procédé de traitement thermique d'un composant (1) en acier, comprenant au moins les étapes suivantes, qui sont réalisées dans l'ordre indiqué :
a) la chauffage du composant (1),
b) le réglage d'une différence de température d'au moins 50 K entre au moins une première zone partielle (2) et au moins une deuxième zone partielle (3) du composant (1),
b') l'introduction d'énergie thermique dans l'ensemble du composant (1) au moyen de chaleur rayonnante,
c) le formage et/ou le refroidissement au moins partiel du composant (1) dans un outil de trempe sous presse (4),
d) le post-usinage mécanique d'au moins une première zone partielle (2) du composant (1),
le réglage de la différence de température à l'étape b) s'effectuant par refroidissement de l'au moins une première zone partielle (2) et/ou par chauffage de l'au moins une deuxième zone partielle (3), et l'au moins une première zone partielle (2) à post-usiner obtenant, avant l'étape d) et au moment du post-usinage mécanique, une résistance inférieure en comparaison de l'au moins une deuxième zone partielle (3).

2. Procédé selon la revendication 1, dans lequel le composant est chauffé d'au moins 500 K au moyen de chaleur rayonnante et/ou de convection à l'étape a).

3. Procédé selon l'une quelconque des revendications précédentes, dans lequel le post-usinage mécanique à l'étape d) est effectué avec au moins un outil de coupe mécanique (5).

4. Procédé selon l'une que des revendications précédentes, dans lequel le composant (1) est maintenu dans l'outil de trempe sous presse (4) pendant le post-usinage mécanique.

5. Procédé selon l'une quelconque des revendications précédentes, dans lequel l'au moins une première zone partielle (2) du composant (1) forme une zone de bride (6) et/ou une zone pour un évidement (7).

6. Dispositif (8) pour le traitement thermique d'un composant (1) en acier, comprenant au moins :
- un premier four pouvant être chauffé (9),
- au moins une station de régulation de température (10) qui est prévue et adaptée pour régler une différence de température entre au moins une première zone partielle (2) et au moins une deuxième zone partielle (3) du composant (1),
- un deuxième four (12) avec un espace intérieur de four pouvant être chauffé au moyen de chaleur rayonnante, le deuxième four (12) étant adapté pour introduire de l'énergie thermique dans l'ensemble du composant en acier (1),
- au moins un outil de trempe sous presse (4),
- au moins un appareil de post-usinage mécanique (11) associé à l'outil de trempe sous presse (4).

7. Dispositif selon la revendication 6, dans lequel l'au moins un appareil de post-usinage mécanique (11) présente au moins un outil de coupe mécanique (5).

8. Dispositif selon la revendication 6 ou 7, dans lequel le dispositif (8) est prévu et adapté pour mettre en œuvre un procédé selon l'une quelconque des revendications 1 à 6.
